(19) Europäisches Patentamt
European Patent Office
Office européen des brevets

(11) EP 1 835 465 B1

(12) EUROPÄISCHE PATENTSCHRIFT

(45) Veröffentlichungstag und Bekanntmachung des Hinweises auf die Patenterteilung:
**10.02.2010 Patentblatt 2010/06**

(51) Int Cl.:
***G06T 11/00*** *(2006.01)*

(21) Anmeldenummer: **06127225.8**

(22) Anmeldetag: **27.12.2006**

(54) **Tomosynthetisches Bildrekonstruktionsverfahren und mit diesem Verfahren arbeitende diagnostische Einrichtung**

Tomosynthetic image reconstruction method and diagnostic device employing said method

Procédé de reconstruction d'images tomosynthétiques et dispositif diagnostique employant ledit procédé

(84) Benannte Vertragsstaaten:
**DE FI FR SE**

(30) Priorität: **17.03.2006 DE 102006012407**

(43) Veröffentlichungstag der Anmeldung:
**19.09.2007 Patentblatt 2007/38**

(73) Patentinhaber: **SIEMENS AKTIENGESELLSCHAFT**
**80333 München (DE)**

(72) Erfinder:
- **Barth, Karl**
  **91315, Höchstadt (DE)**
- **Härer, Wolfgang**
  **91052, Erlangen (DE)**
- **Mertelmeier, Thomas**
  **91058, Erlangen (DE)**
- **Wiesent, Karl**
  **91052, Erlangen (DE)**

(56) Entgegenhaltungen:
**US-A1- 6 125 163 US-A1- 2004 081 273**

EP 1 835 465 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung bezieht sich auf ein insbesondere für die Mammographie geeignetes tomosynthetisches Bildrekonstruktionsverfahren, bei dem aus einer Mehrzahl von mit verschiedenen Projektionswinkeln aufgenommenen digitalen Einzelbildern ein tomosynthetisches 3D-Röntgenbild zusammengesetzt wird. Außerdem bezieht sich die Erfindung auf eine mit diesem Verfahren arbeitende diagnostische Einrichtung.

Bei der Mammographie handelt es sich um eine Röntgenuntersuchung der weiblichen Brust mit dem Ziel, Tumore in einem möglichst frühen Stadium zu erkennen. Durch stetige Verbesserung der Mammographieverfahren wird angestrebt, Röntgenbilder mit hoher Aussagekraft zu erzeugen, um gutartige von bösartigen Veränderungen zu unterscheiden und die Zahl der fehlerhaften Befunde, d. h. die Zahl der verdächtigen Befunde, die von nicht bösartigen Veränderungen hervorgerufen sind, und die Zahl der nicht entdeckten bösartigen Tumore, zu reduzieren. Bei der herkömmlichen Röntgenmammographie wird dabei in einer einzigen Projektionsrichtung ein zweidimensionales Einzelbild der komprimierten Brust erzeugt. Da bei einer solchen Projektion die in Richtung des Röntgenstrahls hintereinander liegenden Gewebeschichten überlagert sind, können stark absorbierende gutartige Strukturen einen bösartigen Tumor überlagern und dessen Erkennbarkeit erschweren.

Um dies zu vermeiden sind beispielsweise aus [1] als Tomosynthese bezeichnete Mammographieverfahren bekannt, bei denen mit einem digitalen Röntgendetektor von der weiblichen Brust Einzelbilder oder Projektionsdaten in einer Mehrzahl von verschiedenen Projektionsrichtungen aufgenommen werden. Aus diesen unter verschiedenen Projektionswinkeln aufgenommenen digitalen Einzelbildern, d.h. aus den zu diesen Einzelbildern gehörenden Bilddaten, kann dann durch Bildrekonstruktionsverfahren ein dreidimensionaler Bilddatensatz erzeugt werden, der beispielsweise aus einer Mehrzahl von Schichtbildern besteht, die jeweils eine parallel zur Empfangsfläche des Röntgendetektors orientierte Schicht der Brust wiedergeben. Ein solcher durch Rekonstruktion gewonnener Bilddatensatz wird im Folgenden als tomosynthetisches 3D-Röntgenbild bezeichnet. Durch diese Maßnahme können in Ausbreitungsrichtung des Röntgenstrahls gesehen tiefer liegende Gewebsstrukturen besser erkannt werden.

Aufgrund der unvollständigen Abtastung, d. h. der nur aus einem begrenzten Winkelbereich verfügbaren Projektionen, ist jedoch eine Rekonstruktion eines 3D-Röntgenbildes nur eingeschränkt möglich, so dass die Bildqualität eines tomosynthetischen 3D-Röntgenbildes nicht die aus der Computertomographie (CT) bekannte Bildqualität erreicht. So ist z.B. die Auflösung in Richtung des Zentralstrahls, die sog. "Tiefenauflösung", reduziert gegenüber der Auflösung in den dazu senkrechten Ebenen. Aufgrund der unvollständigen Abtastung können auch keine quantitativen Werte des Schwächungskoeffizienten $\mu$ rekonstruiert werden, so dass sich auch der Charakter oder Eindruck des bei der Tomosynthese gewonnenen Bildes vom Charakter eines mit Methoden der Computertomographie gewonnenen Bildes unterscheidet. Der Schwerpunkt der Abbildungsaufgabe liegt daher mehr in einer bestmöglichen dreidimensionalen Visualisierung des Objektes unter den gegebenen Projektionsbedingungen als in einer quantitativen Rekonstruktion des lokalen Absorptionskoeffizienten $\mu$.

Sowohl in der Tomographie als auch in der Tomosynthese hängt die diagnostische Verwertbarkeit eines rekonstruierten 3D-Röntgenbildes wesentlich von den verwendeten Rekonstruktionsalgorithmen ab, die außerdem im Hinblick auf die jeweilige diagnostische Fragestellung optimiert werden müssen.

Die im Stand der Technik für die Tomosynthese bekannten Rekonstruktionsverfahren sind beispielsweise in [1] zusammengefasst. Verwendet werden im Wesentlichen ungefilterte Rückprojektion ([2]), nichtlineare Rückprojektion ([3]), Matrix-Inversions-Verfahren ([4]), iterative (algebraische) Verfahren ([5],[6]) sowie gefilterte Rückprojektion (FBP) ([6],[7], US 6,442,288 B1]).

Bei der gefilterten Rückprojektion werden die vom Röntgendetektor bereitgestellten Messdaten gefiltert und anschließend auf eine Volumenmatrix - das digitale dreidimensionale Bild eines Teilvolumens des Objektes - rückprojiziert. Sie ist eines der vielversprechendsten Rekonstruktionsverfahren, da sie auf einem analytischen Algorithmus beruht, der aus der Abtastgeometrie abgeleitet werden kann und numerisch sehr effizient und stabil ist. Bisher kamen dabei im wesentlichen Filter zum Einsatz, die den bei der tomographischen Rekonstruktion verwendeten Filtern ähnlich sind. So wird beispielsweise in [6] eine von Feldkamp speziell für Tomographie auf Kreisbahnen bei Verwendung eines kegelförmigen Röntgenstrahlbündels entwickelte und als Feldkamp-Algorithmus ([8]) bekannte gefilterte Rückprojektion angewendet.

Aufgrund der prinzipiellen Unvollständigkeit einer tomosynthetischen Rekonstruktion in der Mammographie können Rekonstruktionsalgorithmen, wie sie aus der Tomographie bekannt sind, nicht ohne weiteres erfolgreich bei der tomosynthethischen Rekonstruktion eingesetzt werden.

Der Erfindung liegt nun die Aufgabe zugrunde, ein insbesondere für die Mammographie geeignetes tomosynthetisches Bildrekonstruktionsverfahren anzugeben, mit dem mit geringem Rechenaufwand ein möglichst gut diagnostisch verwertbares 3D-Röntgenbild erzeugt werden kann. Außerdem liegt der Erfindung die Aufgabe zugrunde, eine mit einem solchen Bildrekonstruktionsverfahren arbeitende diagnostische Einrichtung anzugeben.

Die erstgenannte Aufgabe wird gemäß der Erfindung gelöst mit einem Bildrekonstruktionsverfahren mit den Merkmalen des Patentanspruches 1. Gemäß diesen Merkmalen wird bei dem tomosynthetischen Bildrekonstruktionsverfahren aus einer Mehrzahl von mit verschiedenen Positionswinkeln in einem begrenzten Winkelbereich aufgenommenen digitalen Einzelbildern ein tomosynthetisches 3D-Röntgenbild durch eine gefilterte Rückprojektion rekonstruiert, bei der eine Filterung mit einem diskreten Faltungskern durchgeführt wird, der im Ortsbereich außerhalb der Null einer Exponentialfunktion entspricht.

Eine diskrete Faltung oder Filterung ist durch die Beziehung

$$y(n) = \sum_{k=-\infty}^{k=+\infty} h(k)x(n-k)$$

definiert, wobei h(k) der so genannte Faltungskern, x(n) die Reihe der Mess- oder Bilddaten - die in verschiedenen diskreten Kanälen unter verschiedenen diskreten Winkelpositionen gemessenen Intensitäten der Röntgenstrahlung - und y(n) die Reihe der durch die Faltung erzeugten gefilterten Daten ist. Der erfindungsgemäße diskrete Faltungskern - im Folgenden als Exponentialkern bezeichnet - ist im Ortsbereich durch die folgenden Beziehungen definiert:

$$h(0) \text{ (Zentralwert, für } k \rightarrow \infty \text{ gilt } h(0) = 1)$$

$$h(1) = -(1-a)/2$$

$$h(k) = h(1)a^{k-1}$$

sowie

$$h(k) = h(-k) \text{ für } k<0$$

Dabei ist k eine ganze Zahl mit |k|>1 und entspricht der Ortsvariablen parallel zur Empfängerfläche, ausgedrückt in Einheiten eines Ortsabstandes, beispielsweise der Abstand zweier benachbarter Kanäle des Röntgendetektors, mit dem bei der diskreten erfindungsgemäßen Faltung oder Filterung - im Folgenden als Exponentialfilterung bezeichnet - anstelle der Integration die Summation durchgeführt wird.

Über den Parameter a kann der Charakter des zu rekonstruierenden Bildes bezüglich Kontrast, Ortsschärfe und Rauschverhalten gesteuert werden. Vorzugsweise liegt a zwischen den Werten Null und Eins. Im Grenzfall a=0 entspricht der Faltungskern einem Laplacefilter, mit dem nur eine Rekonstruktion von Kanten im Bild erfolgt (X- oder λ-Rekonstruktion). Im Grenzfall a=1 ergibt sich der Einheitskern, mit dem das so genannte Layergram, d.h. die einfache Rückprojektion rekonstruiert wird.

Die Filterung kann sowohl im Ortsbereich als auch im Frequenzbereich durchgeführt werden. Dazu wird die Fouriertransformierte der Mess- oder Bilddaten mit der Fouriertransformierten des Exponentialkernes multipliziert und dieses Produkt wird anschließend fourierrücktransformiert. Eine solche, mathematisch zum selben Ergebnis führende Vorgehensweise führt zu einer Vereinfachung der mathematisch erforderlichen Operationen und damit zu einer Beschleunigung der Bildrekonstruktion.

Die Exponentialfilterung kann außerdem nachträglich auf Datensatzebene an einem bereits mit einem anderen Filter gefilterten Datensatz oder auf Bildebene an einem mit einem anderen Rekonstruktionsverfahren aus diesen Daten erzeugten 3D-Bild erfolgen.

Die Verwendung eines solchen, einer Exponentialfunktion entsprechenden Faltungskernes (Exponentialkern) ist bereits für die Tomographie aus der US 6,125,136 A1 bekannt, deren Inhalt ausdrücklich Bestandteil der vorliegenden Anmeldung ist. Die Erfindung beruht nun auf der überraschenden Erkenntnis, dass dieses bekannte Rekonstruktionsverfahren besonders für die Bildrekonstruktion bei unvollständigen Bilddatensätzen, wie sie in der Tomosynthese vorliegen, geeignet ist, da mit einem solchen Exponentialkern auch bei nur aus einem kleinen Winkelbereich vorliegenden Projektionsdaten die insbesondere in der Mammographie diagnostisch relevanten Strukturen, Mikrokalzifikationen oder Tumore, durch entsprechende Wahl des Parameters a besonders gut erkennbar dargestellt werden können. Mit anderen Worten: Durch die Verwendung eines solchen Exponentialfilters erfolgt zwar keine exakte Rekonstruktion des Objektes (quantitative Wiedergabe der Objektdichte) und der Schwerpunkt wird mehr auf die Visualisierung von Kantenbereichen gelegt, dies ist aber bei der Tomosynthese von Vorteil, da dort eine solche quantitative Information aufgrund der unvollständigen Abtastung prinzipiell nicht möglich ist.

Der Bildcharakter kann problemangepasst eingestellt werden, z.B. mit Betonung von kleinen hochkontrastigen Strukturen einerseits (in der Mammographie z.B. Mikrokalk), bzw. niederkontrastigen Verdichtungen (Tumoren) andererseits. Erreicht wird dies durch entsprechende Wahl des Faktors a, der für die Mammographie vorzugsweise etwa 0,9 beträgt. Durch die Möglichkeit der rekursiven Implementierung kann die Filterung extrem schnell durchgeführt werden.

Durch den exponentiellen Abfall der Filterkoeffizienten und gegebenenfalls durch eine zusätzliche Verkürzung der Kernlänge L klingt der Filterkern außerdem erheblich schneller ab als übliche Tomographie- oder Tomosynthesefilter. Solche kurzen effektiven Kernlängen begrenzen sehr vorteilhaft die Reichweite, über die sich Datenstörungen im Bild fortpflanzen können. Insbesondere wird das Problem der Tomosynthese, meist nur abgeschnittene Projektionen, bei denen der Projektionskegel das Untersuchungsobjekt nicht vollständig abdeckt, des Objekts messen zu können, erheblich entschärft, da sich bei kurzen Kernen die zugeordneten Bildfehler vom Bildrand nicht mehr ins Bildinnere fortpflanzen können.

Bei einem auf eine endliche Länge L begrenzten Faltungskern h(k) ist es außerdem von Vorteil, den Zentralwert h(0) derart festzulegen, dass die Kernsumme gleich Null wird

$$\sum_{k=-N}^{k=+N} h(k) = 0, \text{ mit } L=2N+1$$

Dies wird erreicht, wenn $h(0) = -\sum_{k\neq 0} h(k)$ gesetzt wird. Eine solche Nullsummeneigenschaft hat sich als besonders vorteilhaft für die Bildqualität herausgestellt.

Die Filterung kann in vorteilhafter Ausgestaltung der Erfindung auch in rekursiver Form implementiert werden, wie dies auch in der US 6,125,136 A1 näher erläutert ist. Das Ergebnis einer Faltung mit dem oben definierten Exponentialkern wird auch erreicht, wenn man von den Originaldaten das Ergebnis einer gemittelten rekursiven Filterung der Ordnung eins abzieht. Ein rekursives Filter der Ordnung eins ist definiert durch die Vorschrift

$$y(n) = ay(n-1) + bx(n)$$

Dieses kann umgeschrieben werden zu

$$y(n) = b\sum_{i=0}^{n-1} a^i \cdot x(n-i)$$

Schreibt man u(n) für die aufsteigende Richtung und v(n) für das Ergebnis in fallender Richtung, so erhält man

$$u(n) = b\sum_{i=0}^{n-1} a^i \cdot x(n-i)$$

$$v(n) = b\sum_{i=0}^{n-1} a^i \cdot x(n+i)$$

Setzt man

$$w(n) = c\cdot x(n)-(u(n)-v(n))$$

$$= c\cdot x(n)-2\cdot b\cdot x(n)-b\sum_{i>0} a^{i}(x(n+i)+x(n-i))$$

$$= (c-2b)\cdot x(n)-ba\sum_{i>0} a^{i-1}\ (x(n+i)+x(n-i))$$

und wählt

$$c = h(0)-1+1/a$$

mit h(0) als Zentralkomponente des oben definierten Exponentialfilters, sowie

$$b = \frac{1-a}{2a}$$

ergibt sich

$$w(n) = h(0)\cdot x(n)-\frac{(1-a)}{2}\sum_{i>0} a^{i-1}\ (x(n+i)+x(n-i))$$

also das Ergebnis einer normalen Faltung mit dem Exponentialfilter für den Parameter $a \neq 0$. Im Spezialfall $a = 0$ braucht der Exponentialfilter nicht rekursiv implementiert zu werden, da er aus nur drei Elementen besteht.

Weitere vorteilhafte Ausgestaltungen des Bildrekonstruktionsverfahrens sind in den weiteren Unteransprüchen angegeben.

Die zweitgenannte Aufgabe wird gemäß der Erfindung gelöst mit einer Einrichtung mit den Merkmalen des Patentanspruches 5, deren Vorteile sinngemäß den zu Patentanspruch 1 angegebenen Vorteilen entsprechen.

Zur weiteren Erläuterung der Erfindung wird auf die Zeichnung verwiesen. Es zeigen:

Fig. 1 eine Einrichtung gemäß der Erfindung in einer schematischen Prinzipdarstellung,

Fig. 2 ein Flussdiagramm, in dem das Verfahren gemäß der Erfindung veranschaulicht ist,

Fig. 3 und 4 jeweils ein Diagramm, in dem Fouriertransformierte bzw. die auf die Fouriertransformierte eines Rampenfilters normierte Fouriertransformierte eines erfindungsgemäßen Exponentialfilters gegen die normierte Ortsfrequenz für unterschiedliche Parameter a aufgetragen ist.

Gemäß Figur 1 umfasst die Einrichtung, im Ausführungsbeispiel ein Mammographiegerät, eine Röntgenröhre 2 zum Erzeugen von Röntgenstrahlen 3, die ein Untersuchungsobjekt 4 durchqueren. Bei dem Untersuchungsobjekt 4 handelt es sich um eine weibliche Brust, die zwischen einer Kompressionsplatte 6 und einer Lagerplatte 8 eingebettet ist. Die das Untersuchungsobjekt 4, die Kompressionsplatte 6 und die Lagerplatte 8 durchquerenden Röntgenstrahlen 3 werden von einem großflächigen digitalen Röntgendetektor 10 empfangen, der aus einer Vielzahl von in einem matrixförmigen Array angeordneten Einzeldetektoren 12 aufgebaut ist, und dessen Empfangsfläche 11 parallel zu den Kompressionsplatten 6, 8 angeordnet ist.

Die Röntgenröhre 2 ist in einem begrenzten Bereich zum Untersuchungsobjekt ortsveränderbar angeordnet, und kann beispielsweise in einem begrenzten Winkelbereich $\varphi_1,\varphi_2$ um eine zur Zeichenebene senkrechte Achse M in unterschiedliche Winkelpositionen j=1 ... n geschwenkt werden, so dass vom Untersuchungsobjekt 4 mit verschiedenen

Projektionswinkeln $\alpha_j$ relativ zur Normalen 13 der Empfangsfläche 11 des Röntgendetektors 10 Einzelbilder erzeugt werden können. Der Winkelbereich $\varphi_1,\varphi_2$ muss dabei nicht symmetrisch zur Normalen 13 angeordnet sein. Diese Einzelbilder bzw. die diesen jeweils zugeordneten Projektionsdaten $P_{\alpha j}$ werden in einer einen Bildrechner enthaltenden Steuer- und Auswerteeinrichtung 14 durch Rekonstruktion zu einem tomosynthetischen 3D-Röntgenbild T zusammengesetzt und auf einem Monitor 18 dargestellt. Der Röntgendetektor 10 ist während der Schwenkbewegung der Röntgenröhre 2 ortsfest. Grundsätzlich ist es jedoch auch möglich, den Röntgendetektor 10 gemeinsam mit zu schwenken oder der Schwenkbewegung der Röntgenröhre 2 folgend linear zu verschieben.

Auch eine Bewegung der Röntgenröhre 2 auf einer begrenzten linearen Bahn statt des Schwenks ist zulässig, so dass die Höhendifferenz zwischen Röntgendetektor 10 und Röntgenröhre konstant bleibt. Diese lineare Bahn muss ebenfalls nicht notwendigerweise symmetrisch zur Normalen 13 verlaufen. Bei dieser linearen Bewegung erfolgt ein Ausrichten der Röntgenröhre 2 auf das Untersuchungsobjekt 4, so dass auch in diesem Fall vom Untersuchungsobjekt 4 Einzelbilder unter verschiedenen Projektionswinkeln $\alpha_j$ aber in einem begrenzten Winkelbereich aufgenommen werden.

Die Steuerung der Winkelposition j oder im Falle einer linearen Verschiebung der Linearposition und der Ausrichtung der Röntgenröhre 2 sowie ihrer Betriebsparameter erfolgt durch Steuersignale S, die von der Steuer- und Auswerteeinrichtung 14 generiert werden. Mit Hilfe von Eingabeelementen, im Beispiel sinnbildlich veranschaulicht durch eine Tastatur 16, können verschiedene, nachfolgend erläuterte Bildrekonstruktionsvarianten vom Benutzer ausgewählt und durchgeführt werden.

Im Flussdiagramm gemäß Fig. 2 ist der Ablauf der Rekonstruktion schematisch veranschaulicht. Die Projektionsdaten $P_{\alpha j}$ werden in einem ersten Schritt einer Vorverarbeitung, z.B. einer logarithmischen Skalierung und einer Normierung unterzogen. Nach dieser Vorverarbeitung erfolgt die Faltung oder Filterung mit dem Faltungskern h(k) gemäß der Erfindung. Anschließend wird durch Rückprojektion aller Projektionen unter Berücksichtigung ihrer Aufnahmegeometrie, z.B. der jeweiligen Lagen von Fokus und Detektor, ein Volumenbild V berechnet. Dieses wird ggf. noch einer Nachverarbeitung unterzogen, z.B. mittels eines bildbearbeitenden Programms, einer Filterung oder mittels eines CAD-Programms (CAD = Computer-Aided-Diagnosis) zum Ermöglichen einer softwaregestützten Diagnose. Es stellt die systembedingt nur näherungsweise rekonstruierte räumliche Verteilung des Röntgenabsorptionskoeffizienten $\mu$ dar und wird als tomosynthetisches 3D-Röntgenbild T entweder auf dem Bildschirm eines Monitors visuell dargestellt oder einer automatisierten, softwaregestützten Auswertung (Diagnose) zugeführt.

Die erfindungsgemäße Faltung oder Filterung kann statt auf den Projektionen auch im Rahmen der Nachverarbeitung auf einem Volumenbild V erfolgen, das entweder durch ungefiltertete Rückprojektion oder durch einen anderen Rekonstruktionsalgorithmus erzeugt worden ist.

Im Diagramm gemäß Fig. 3 ist die Fouriertransformierte $H(\nu)$ des erfindungsgemäßen Exponentialkernes h(k) für unterschiedliche Parameter a gegen die Ortsfrequenz $\nu$ aufgetragen. Die Fouriertransformierte $H(\nu)$ ist auf ihren Maximalwert, die Ortsfrequenz $\nu$ auf eine durch Länge L des Kerns gegebene Grenzfrequenz $\nu_g$ normiert. Im Beispiel wurde die Berechnung für einen Exponentialkern h(k) der Länge L = 255 durchgeführt.

Im Diagramm ist außerdem der Verlauf des so genannten Rampenfilters $|\nu|$ eingetragen Dem Diagramm ist nun zu entnehmen, dass durch die Wahl des Parameters a das Ausmaß, in dem hohe Ortsfrequenzen $\nu$ unterdrückt werden signifikant beeinflusst werden kann.

Das Ausmaß, in dem hohe Ortsfrequenzen gegenüber einem Rampenfilters $|\nu|$ in Abhängigkeit vom Parameter a unterdrückt werden, ist insbesondere im Diagramm gemäß Figur 4 zu erkennen, in dem die auf das Rampenfilter $|\nu|$ normierte Fouriertransformierte $H(\nu)$ des Exponentialkerns h(k) für unterschiedliche Parameter gegen die Ortsfrequenz $\nu$ aufgetragen ist.

[1] Dobbins JT, III, Godfrey DJ. "Digital x-ray tomosynthesis: current state of the art and clinical potential", Physics in Medicine and Biology 48, R65-R106, 2003

[2] Niklason LT, Christian BT, Niklason LE, et al., "Digital tomosynthesis in breast imaging", Radiology 205, 399-406, 1997

[3] Suryanarayanan S, Karellas A, Vedantham S, et al., "Evaluation of linear and nonlinear tomosynthetic reconstruction methods in digital mammography", Academic Radiology 8, 219-224, 2001

[4] D.J.Godfrey, A. Rader und J.T. Dobbins, III, "Practical strategies for the clinical implementation of matrix inversion tomosynthesis (MITS), Medical Imaging 2003: Physics of Medical Imaging, Proc. SPIE Vol. 5030 (2003), pp. 379-389

[5] Wu T, Stewart A, Stanton M, et al., "Tomographic mammography using a limited number of low-dose cone-beam projection images", Medical Physics 30, 365-380, 2003.

[6] Wu T, Moore R, Rafferty EA, Kopans DB, "A comparison of reconstruction algorithms for breast tomosynthesis", Medical Physics 31, 2636-2647, 2004,

[7] Lauritsch G, Haerer WH, "A theoretical framework for filtered backprojection in tomosynthesis", Proc. SPIE, 3338, 1127-1137, 1998

[8] Feldkamp, L. A.; Davis, L. C.; Kress, J. W., "Practical cone-beam algorithm", Journal of the Optical Society of America A: Optics, Image Science, and Vision, Volume 1, Issue 6, 12-619, 1984

## Patentansprüche

1. Tomosynthetisches Bildrekonstruktionsverfahren, bei dem aus einer Mehrzahl von mit verschiedenen Projektionswinkeln ($\alpha_k$) in einem begrenzten Winkelbereich ($\varphi_1$+$\varphi_2$) aufgenommenen digitalen Projektionsdaten ($P_{i,\alpha k}$) ein tomosynthetisches 3D-Röntgenbild (T) durch eine diskrete gefilterte Rückprojektion rekonstruiert wird, bei der zumindest eine Filterung mit einem Faltungskern (h(k)) durchgeführt wird, der im Ortsbereich außerhalb des Zentralwertes (h(0)) einer Exponentialfunktion entspricht.

2. Tomosynthetisches Bildrekonstruktionsverfahren nach Anspruch 1, bei dem die Filterung rekursiv durchgeführt wird.

3. Tomosynthetisches Bildrekonstruktionsverfahren nach Anspruch 1 oder 2, bei dem der Faltungskern (h(k)) auf eine endliche Länge (L) begrenzt wird.

4. Tomosynthetisches Bildrekonstruktionsverfahren nach Anspruch 3, bei dem der Zentralwert (h(0)) des Faltungskernes (h(k)) derart gewählt wird, dass die Kernsumme gleich Null wird.

5. Einrichtung zum Erzeugen eines tomosynthethischen 3D-Röntgenbildes (T) mit einer in einem begrenzten Bereich zu einem Untersuchungsobjekt (4) ortsveränderbar angeordneten Röntgenröhre (2) und mit einem digitalen Röntgendetektor (10) zum Aufnehmen von digitalen Projektionsdaten ($P_{i,\alpha k}$) mit verschiedenen Projektionswinkeln ($\alpha_k$) sowie mit einer Auswerteeinrichtung (14) zum Verarbeiten der vom Röntgendetektor (10) bereitgestellten Detektorsignale und einer darin implementierten Software zur Rekonstruktion eines tomosynthetischen 3D-Röntgenbildes (T) mit einem Bildrekonstruktionsverfahren nach einem der vorhergehenden Ansprüche.

## Claims

1. Tomosynthetic image reconstruction method, in which, from a plurality of digital projection data ($P_{i,\alpha k}$) recorded at different projection angles ($\alpha_k$) in a restricted angular range ($\varphi_1$+$\varphi_2$), a tomosynthetic 3D x-ray image (T) is reconstructed by a discrete filtered back projection, in which at least one filtering is performed with a convolution kernel (h(k)) which in the local area outside the central value (h(0)) corresponds to an exponential function.

2. Tomosynthetic image reconstruction method according to claim 1, in which the filtering is performed recursively.

3. Tomosynthetic image reconstruction method according to claim 1 or 2, in which the convolution kernel (h(k)) is restricted to a finite length (L).

4. Tomosynthetic image reconstruction method according to claim 3, in which the central value (h(0)) of the convolution kernel (h(k)) is selected so that the core sum becomes equal to zero.

5. Device to create a tomosynthetic 3D x-ray image (T) with an x-ray tube (2) of which the location can be changed within a restricted range in relation to the object to be examined and with a digital x-ray detector (10) to record digital projection data ($P_{i,\alpha k}$) at different projection angles ($\alpha_k$) as well as with an evaluation device (14) for processing the detector signals provided by the x-ray detector (10) and software implemented in this device for reconstruction of a tomosynthetic 3D x-ray image (T) with an image reconstruction method according to one of the previous claims.

## Revendications

1. Procédé de reconstruction d'images tomosynthétique dans lequel une radiographie tridimensionnelle tomosynthétique (T) est reconstruite, à partir d'une pluralité de données de projection numériques ($P_{i,\ \alpha k}$) prises sous différents angles de projection ($\alpha_k$) dans une plage angulaire limitée ($\varphi_1$ + $\varphi_2$) , par une rétroprojection filtrée discrète dans laquelle au moins un filtrage est opéré avec un noyau de convolution (h(k)) qui correspond à une fonction exponentielle dans la zone spatiale en dehors de la valeur centrale (h (0) ) .

2. Procédé de reconstruction d'images tomosynthétique selon la revendication 1, dans lequel le filtrage est effectué récursivement.

3. Procédé de reconstruction d'images tomosynthétique selon la revendication 1 ou 2, dans lequel le noyau de convolution (h(k)) est limité à une longueur finie (L).

4. Procédé de reconstruction d'images tomosynthétique selon la revendication 3, dans lequel la valeur centrale (h(0)) du noyau de convolution (h(k)) est choisie de manière telle que la somme du noyau devient égale à zéro.

5. Dispositif pour générer une radiographie tridimensionnelle tomosynthétique (T) avec un tube à rayons X (2) situé mobile dans une zone limitée par rapport à un objet à examiner (4) et avec un détecteur de rayons X (10) numérique pour prendre des données de projection numériques ($P_{i,\ \alpha k}$) sous différents angles de projection ($\alpha_k$) ainsi qu'avec un dispositif d'évaluation (14) pour traiter les signaux de détecteur fournis par le détecteur de rayons X (10) et un logiciel pour reconstruire une radiographie tridimensionnelle tomosynthétique (T) avec un procédé de reconstruction d'images selon l'une des revendications précédentes.

FIG 1

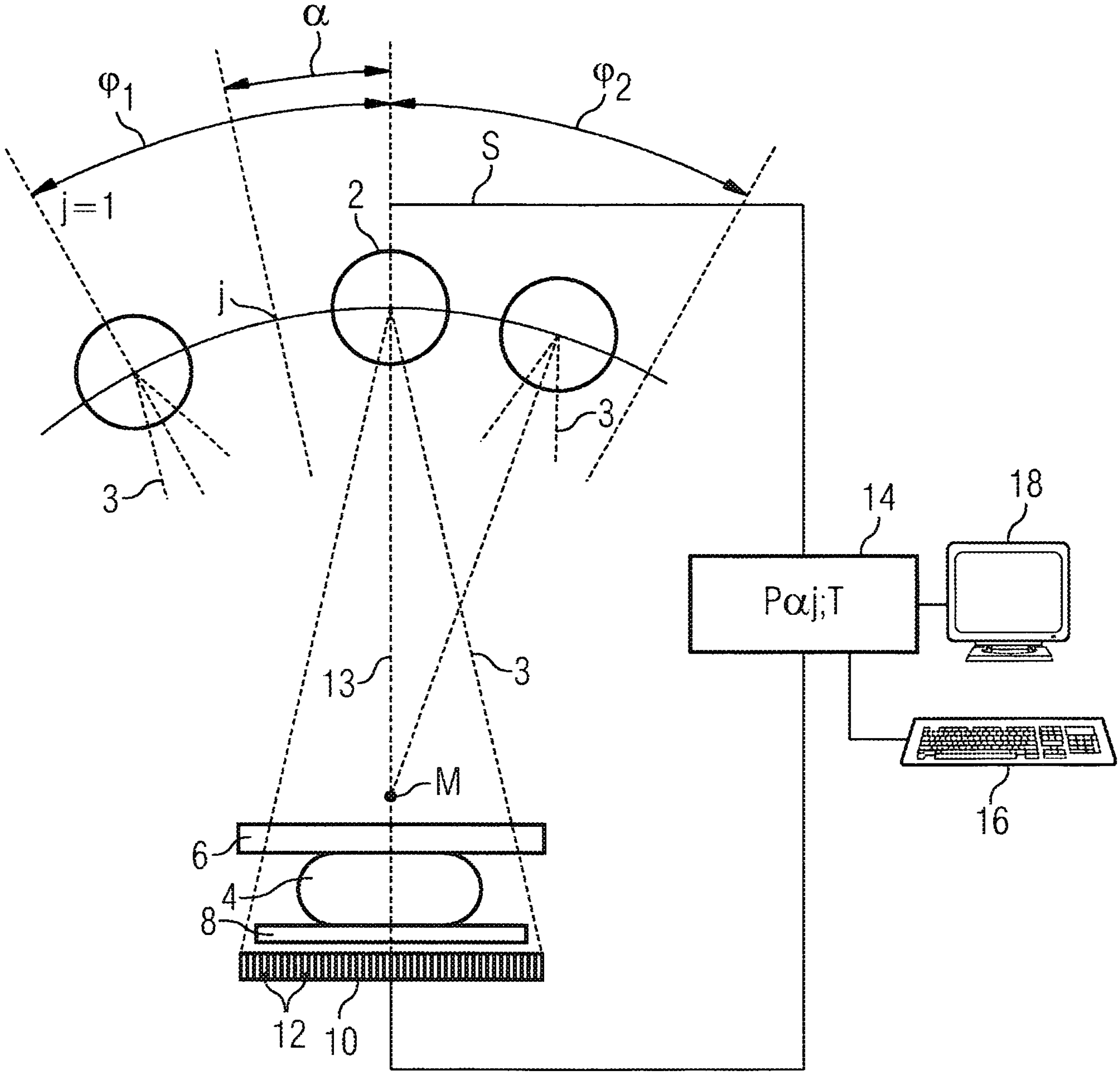

FIG 2

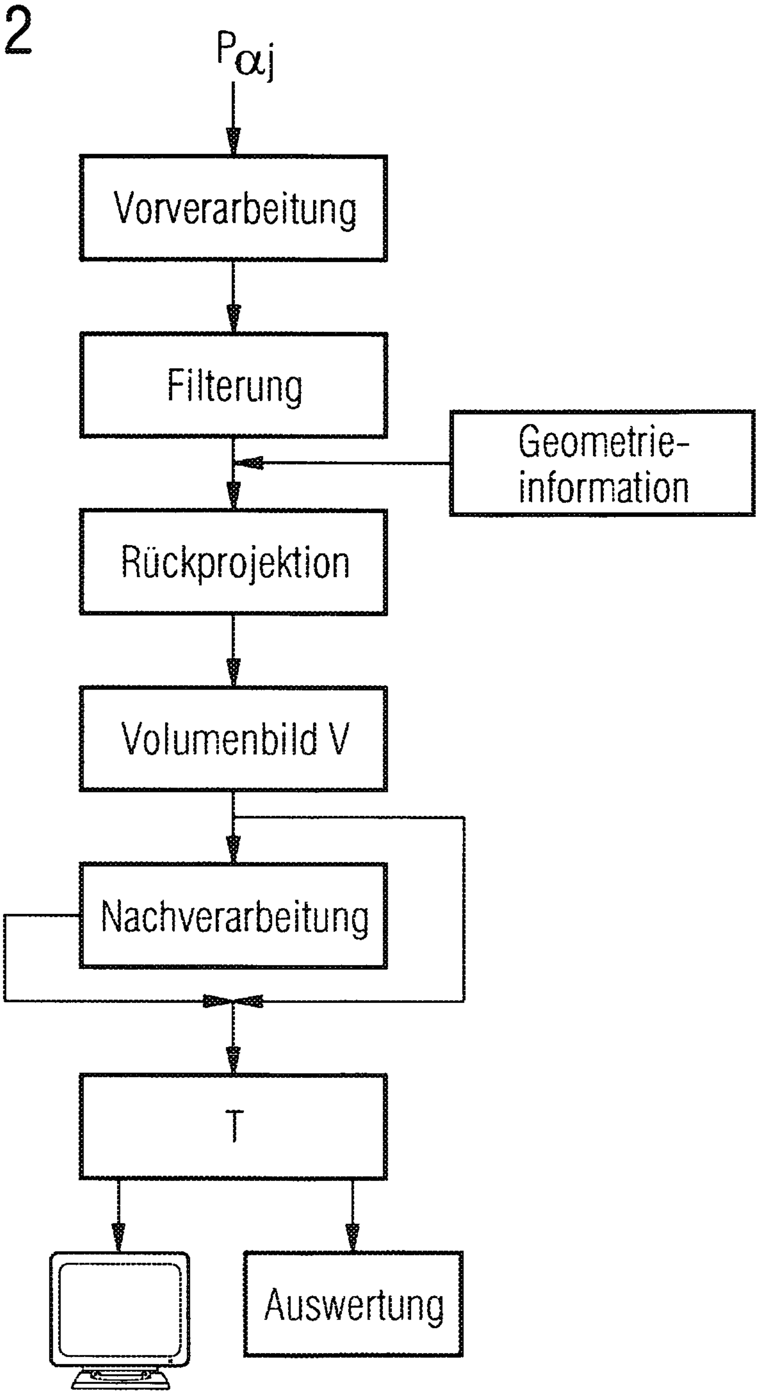
$P_{\alpha j}$
Vorverarbeitung
Filterung
Geometrie-
information
Rückprojektion
Volumenbild V
Nachverarbeitung
T
Auswertung

FIG 3

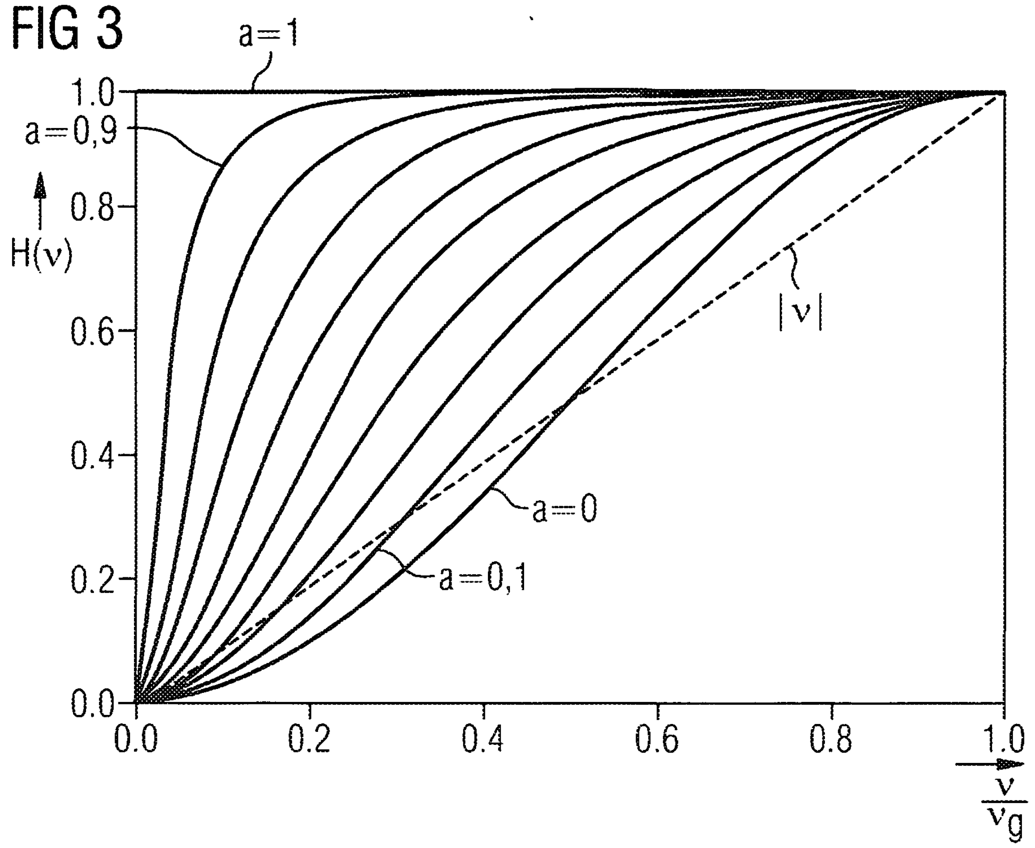
a=1
a=0,9
H(ν)
1.0
0.8
0.6
0.4
0.2
0.0
|ν|
a=0
a=0,1
0.0
0.2
0.4
0.6
0.8
1.0
ν/νg

FIG 4

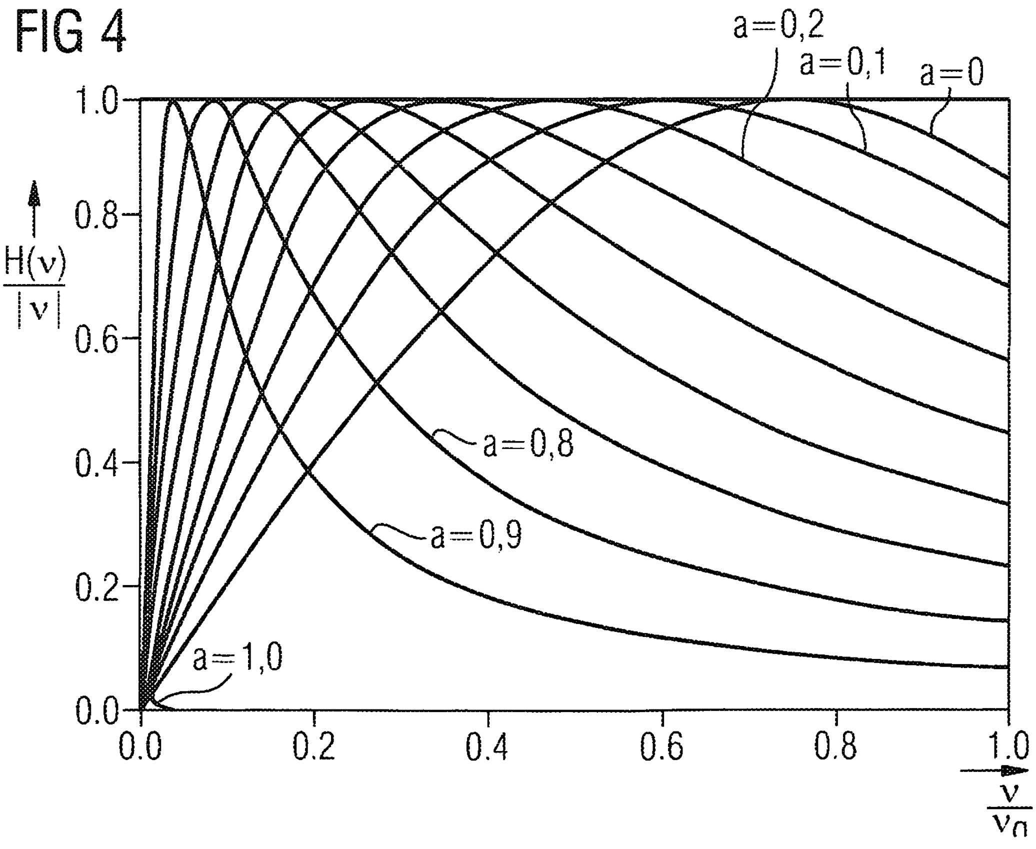
a=0,2
a=0,1
a=0
H(ν)/|ν|
1.0
0.8
0.6
0.4
0.2
0.0
a=0,8
a=0,9
a=1,0
0.0
0.2
0.4
0.6
0.8
1.0
ν/νg

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6442288 B1
- US 6125136 A1


### In der Beschreibung aufgeführte Nicht-Patentliteratur


- **DOBBINS JT, III ; GODFREY DJ.** Digital x-ray tomosynthesis: current state of the art and clinical potential. *Physics in Medicine and Biology,* 2003, vol. 48, R65-R106
- **NIKLASON LT ; CHRISTIAN BT ; NIKLASON LE et al.** Digital tomosynthesis in breast imaging. *Radiology,* 1997, vol. 205, 399-406
- **SURYANARAYANAN S ; KARELLAS A ; VEDANTHAM S et al.** Evaluation of linear and nonlinear tomosynthetic reconstruction methods in digital mammography. *Academic Radiology,* 2001, vol. 8, 219-224
- **D.J.GODFREY ; A. RADER ; J.T. DOBBINS, III.** Practical strategies for the clinical implementation of matrix inversion tomosynthesis (MITS. *Medical Imaging 2003: Physics of Medical Imaging, Proc. SPIE,* 2003, vol. 5030, 379-389
- **WU T ; STEWART A ; STANTON M et al.** Tomographic mammography using a limited number of low-dose cone-beam projection images. *Medical Physics,* 2003, vol. 30, 365-380
- **WU T ; MOORE R ; RAFFERTY EA ; KOPANS DB.** A comparison of reconstruction algorithms for breast tomosynthesis. *Medical Physics,* 2004, vol. 31, 2636-2647
- **LAURITSCH G ; HAERER WH.** A theoretical framework for filtered backprojection in tomosynthesis. *Proc. SPIE,* 1998, vol. 3338, 1127-1137
- **FELDKAMP, L. A. ; DAVIS, L. C. ; KRESS, J. W.** Practical cone-beam algorithm. *Journal of the Optical Society of America A: Optics, Image Science, and Vision,* 1984, vol. 1 (6), 12-619